# EUROPÄISCHE PATENTSCHRIFT

(11) **EP 1 360 429 B1**
(45) Veröffentlichungstag und Bekanntmachung des Hinweises auf die Patenterteilung: **13.10.2004**
(21) Anmeldenummer: 02706604.2
(22) Anmeldetag: 19.01.2002
(51) Int. Cl.: F16D 65/21

(54) **SCHEIBENBREMSE**
DISC BRAKE
FREIN A DISQUE

(30) Priorität: 07.02.2001 DE 10105540
(43) Veröffentlichungstag der Anmeldung: 12.11.2003
(73) Patentinhaber: ROBERT BOSCH GMBH, 70442 Stuttgart (DE)
(72) Erfinder: BAUMANN, Dietmar, 71282 Hemmingen (DE); VOLLERT, Herbert, 71665 Vaihingen/Enz (DE); SCHMIDT, Hanniel, 76307 Karlsbad (DE); KELLER, Frieder, 76698 Ubstadt-Weiher (DE)
(86) Internationale Anmeldenummer: PCT/DE2002/000162
(87) Internationale Veröffentlichungsnummer: WO 2002/063177

(56) Entgegenhaltungen:
- EP-A- 0 208 098
- DE-A- 3 441 128
- FR-A- 2 146 160
- FR-A- 2 648 098
- US-A- 3 261 432
- US-A- 3 277 982

## Beschreibung

### Stand der Technik

Die Erfindung betrifft eine Scheibenbremse gemäß dem Oberbegriff des Anspruchs 1. Eine solche Bremse ist in der FR 2 146 160 offenbart.

Herkömmliche und jedenfalls derzeit üblicherweise verwendete Scheibenbremsen sind hydraulisch betätigt. Sie weisen einen Bremssattel auf, in dem zwei Reibbremsbeläge beiderseits einer zwischen ihnen angeordneten Bremsscheibe einliegen. Im Bremssattel ist ein hydraulisch beaufschlagbarer Reibbremsbelagkolben quer zur Bremsscheibe verschieblich aufgenommen, mit dem ein Reibbremsbelag gegen die Bremsscheibe drückbar ist. Der andere Reibbremsbelag kann ebenfalls durch einen Reibbremsbelagkolben gegen die andere Seite der Bremsscheibe drückbar sein (sog. Festsattel). Auch ist es bekannt, den Bremssattel als sog. Schwimmsattel quer zur Bremsscheibe verschieblich auszubilden. Durch Andrücken des einen Reibbremsbelags gegen die eine Seite der Bremsscheibe wird der Bremssattel quer zur Bremsscheibe verschoben und drückt den anderen Reibbremsbelag gegen die andere Seite der Bremsscheibe. Durch das Andrücken der beiden Reibbremsbeläge wird die Bremsscheibe gebremst.

Auch ist inzwischen eine Anzahl elektromechanisch betätigter Scheibenbremsen bekannt, bei denen ein Reibbremsbelag mittels eines Elektromotors über ein Rotations/Translations-Umsetzungsgetriebe gegen eine Bremsscheibe drückbar ist. Ein Beispiel einer solchen elektromechanisch betätigten Scheibenbremse ist in der WO 96/03 301 offenbart. Die bekannte Scheibenbremse weist einen Elektromotor auf, mit dem über einen Spindeltrieb als Rotations/Translations-Umsetzungsgetriebe ein Reibbremsbelag gegen eine Bremsscheibe drückbar ist. Der Elektromotor und der Spindeltrieb bilden eine Betätigungseinrichtung der bekannten Scheibenbremse, die in einem als Schwimmsattel ausgebildeten Bremssattel untergebracht sind. Die bekannten elektromechanisch betätigten Scheibenbremsen haben allgemein den Nachteil, dass sie im Vergleich mit hydraulisch betätigten Scheibenbremsen auf Grund des Elektromotors und des Rotations/Translations-Umsetzungsgetriebes groß bauen und schwer sind. Auf Grund ihrer Größe sind die bekannten elektromechanisch betätigten Scheibenbremsen schlecht innerhalb einer Felge eines Fahrzeugrades unterbringbar, wo Scheibenbremsen üblicherweise angeordnet sind. Das hohe Gewicht der elektromechanisch betätigten Scheibenbremsen beeinträchtigt Fahrverhalten und Straßenlage eines Fahrzeugs insbesondere deshalb, weil die Scheibenbremse zu den sog. ungefederten Massen zählt, die für ein gutes Fahrverhalten und eine gute Straßenlage niedrig gehalten werden sollen. Weiter Nachteil elektromechanisch betätigter Scheibenbremsen ist eine hohe Stromaufnahme ihres Elektromotors und eine damit verbundene hohe Belastung eines elektrischen Bordnetzes eines mit der Bremse ausgerüsteten Fahrzeugs.

Den bekannten hydraulisch und elektromechanisch betätigten Scheibenbremsen gemeinsam ist der Nachteil, dass sie keine Bremskraftunterstützung aufweisen, vergleichbar der Bremskraftunterstützung, wie sie von der sog. auflaufenden Bremsbacke einer Trommelbremse bekannt ist. Die auflaufende Bremsbacke einer Trommelbremse wird beim Andrücken gegen die Bremstrommel von der drehenden Bremstrommel zusätzlich gegen die Bremstrommel gedrückt, wodurch sich die Bremskraft erhöht.

### Vorteile der Erfindung

Die erfindungsgemäße Scheibenbremse mit den Merkmalen des Anspruch 1 weist einen Mehrfach-Bremszylinder auf, der seitlich der Bremsscheibe angeordnet und in einer Sekantenrichtung der Bremsscheibe beweglich ist. Der Bremszylinder kann beispielsweise mittels einer Schiebeführung oder dgl. in der Sekantenrichtung der Bremsscheibe verschiebbar geführt sein. Ebenso ist es möglich, denn Bremszylinder drehbar um eine gedachte Drehachse zu lagern, die bezüglich des Bremszylinders radial nach innen oder nach außen versetzt ist. Durch eine solche Drehlagerung ist der Bremszylinder auf einer Kreisbogenbahn beweglich, die zumindest in einem öder mehreren Punkten in einer Sekantenrichtung der Bremsscheibe verläuft und die als ausreichende Annäherung an die Sekantenrichtung im Sinne der Erfindung angesehen werden soll. Der Bremszylinder muss also nicht auf einer gedachten Geraden beweglich geführt sein.

Der Begriff Mehrfach-Bremszylinder ist gewählt worden, weil der Bremszylinder der erfindungsgemäßen Scheibenbremse mindestens zwei in ihm verschieblich aufgenommene Kolben aufweist. Der Mehrfach-Bremszylinder der erfindungsgemäßen Scheibenbremse weist einen Reibbremsbelagkolben auf, der quer oder zumindest näherungsweise quer zur Bremsscheibe verschieblich ist. Durch eine hydraulische Druckbeaufschlagung wird der Reibbremsbelagkolben wie von hydraulisch betätigten Scheibenbremsen bekannt in Richtung der Bremsscheibe verschoben und drückt einen zwischen ihm und der Bremsscheibe angeordneten Reibbremsbelag gegen die Bremsscheibe, wodurch in an sich bekannter Weise eine Bremskraft erzeugt wird.

Außer dem Reibbremsbelagkolben weist der Bremszylinder der erfindungsgemäßen Scheibenbremse einen Bremsunterstützungskolben auf, der in einer Bewegungsrichtung des Bremszylinders verschieblich im Bremszylinder aufgenommen ist. Der Bremsunterstützungskolben stützt sich an einem ortsfesten Widerlager; beispielsweise an einem Bremssattel der Scheibenbremse ab. Der Reibbremsbelagkolben und der Bremsunterstützungskolben kommunizieren miteinander beispielsweise durch eine im Bremszylinder mit konstantem Volumen eingeschlossene Hydraulikflüssigkeit.

Zum Betätigen der erfindungsgemäßen Scheibenbremse wird deren Bremszylinder in einer Drehrichtung der Bremsscheibe und in Richtung des ortsfesten Widerlagers des Bremsunterstützungskolben verschoben. Der sich an dem Widerlager abstützende Bremsunterstützungskolben wird vom Widerlager in den auf das Widerlager zu bewegten Bremszylinder verschoben. Der in den Bremszylinder hinein verschobene Bremsunterstützungskolben verdrängt Hydraulikflüssigkeit und verschiebt dadurch den Reibbremsbelagkolben aus dem Bremszylinder heraus. Der Reibbremsbelagkolben wird in Richtung der Bremsscheibe verschoben und drückt den zwischen ihm und der Bremsscheibe angeordneten Reibbremsbelag gegen die Bremsscheibe, wodurch der Reibbremsbelag die Bremsscheibe bremst.

Die drehende Bremsscheibe übt eine Reibungskraft in Sekantenrichtung auf den gegen sie gedrückten Reibbremsbelag aus, der die Reibungskraft über den Reibbremsbelagkolben auf den Bremszylinder überträgt. Die von der drehenden Bremsscheibe auf den gegen sie gedrückten Reibbremsbelag ausgeübte Reibungskraft verschiebt also den Bremszylinder in Richtung des ortsfesten Widerlagers, das dadurch den Bremsunterstützungskolben stärker in den Bremszylinder hinein drückt. Die vom Bremsunterstützungskolben auf den Reibbremsbelagkolben ausgeübte Druckkraft und damit die Andruckkraft des Reibbremsbelags gegen die Bremsscheibe werden erhöht, d.h. die Bremskraft der erfindungsgemäßen Scheibenbremse wird vergrößert. Die erfindungsgemäße Scheibenbremse weist somit eine Bremskraftunterstützung auf, die durch Andrücken des Reibbremsbelags gegen die Bremsscheibe erzeugte Bremskraft wird nur zum Teil durch eine äußere Betätigungskraft aufgebracht, mit der der Mehrfach-Bremszylinder in Richtung des ortsfesten Widerlagers bewegt wird, zum übrigen Teil wird die Bremskraft in beschriebener Weise durch die von der drehenden Bremsscheibe auf den gegen sie gedrückten Reibbremsbelag ausgeübte Reibungskraft erzeugt. Durch die Bremskraftverstärkung der erfindungsgemäßen Scheibenbremse ist eine zu ihrer Betätigung aufzubringende Betätigungskraft verringert, des weiteren kann die erfindungsgemäße Scheibenbremse auf Grund ihrer Bremskraftverstärkung kleiner und leichter aufgebildet werden. Weiterer Vorteil der erfindungsgemäßen Scheibenbremse ist eine erreichbare Steigerung ihrer Dynamik, also einer Verkürzung der Zuspann- und Lösezeit, durch die verringerte Betätigungskraft und die mögliche Verringerung ihres Gewichts.

Die Unteransprüche haben vorteilhafte Ausgestaltungen und Weiterbildungen der im Anspruch 1 angegebenen Erfindung zum Gegenstand.

In bevorzugter Ausgestaltung gemäß Anspruch 2 weist der Mehrfach-Bremszylinder der erfindungsgemäßen Scheibenbremse zwei Bremsunterstützungskolben auf, die in entgegengesetzten Richtungen verschieblich im Bremszylinder aufgenommen sind und die sich aneinander entgegengerichteten ortsfesten Widerlagern abstützen. Die beiden Bremsunterstützungskolben können gleichachsig im Bremszylinder angeordnet sein, sie können auch seitlich versetzt beispielsweise nebeneinander angeordnet sein. Ein Ausschiebeweg der beiden Bremsunterstützungskolben ist begrenzt, sie lassen sich nicht über eine Grundstellung bei nicht betätigter Scheibenbremse hinweg aus dem Bremszylinder heraus verschieben. Die Betätigung der Scheibenbremse erfolgt wie vorstehend zu Anspruch 1 beschrieben durch Bewegen des Bremszylinders in Drehrichtung der Bremsscheibe in Richtung des einen Widerlagers. Der zweite Bremsunterstützungskolben ist bei der Bremsung nicht aktiv, er verbleibt durch seine Ausschiebewegbegrenzung in seiner Grundstellung und begrenzt das Volumen im Bremszylinder. Ist beispielsweise bei Rückwärtsfahrt die Drehrichtung der Bremsscheibe umgekehrt, wird zur Betätigung der Scheibenbremse der Bremszylinder in Richtung des Widerlagers des zweiten Bremsunterstützungskolbens verschoben. Diese Verschieberichtung ist durch die umgekehrte Drehrichtung der Bremsscheibe wieder deren Drehrichtung. Die Bremsung bei umgekehrter Drehrichtung der Bremsscheibe erfolgt in gleicher, zu Anspruch 1 beschriebener Weise mit dem zweiten Bremsunterstützungskolben, der erste Bremsunterstützungskolben ist diesem Fall nicht aktiv, sondern liegt an seiner Ausschiebewegbegrenzung an. Durch das Vorsehen zweier, in entgegengesetzten Richtungen verschieblicher Bremsunterstützungskolben weist die erfindungsgemäße Scheibenbremse für beide Drehrichtungen der Bremsscheibe eine Bremskraftunterstützung auf, die Scheibenbremse ist drehrichtungsunabhängig.

Die Bremskraftunterstützung kann durch Wahl unterschiedlich großer Kolbenflächen der Bremsunterstützungskolben für die beiden Drehrichtungen der Bremsscheibe unterschiedlich gewählt sein. Durch gleich große Kolbenflächen der beiden Bremsunterstützungskolben ist die Bremskraftunterstützung der erfindungsgemäßen Scheibenbremse für beide Drehrichtungen der Bremsscheibe gleich (Anspruch 3).

Durch Wahl unterschiedlich oder auch gleich großer Kolbenflächen des Bremsunterstützungskolbens und des Reibbremsbelagkolbens lässt sich die Höhe der Bremskraftunterstützung wählen (Anspruch 4). Gemäß Anspruch 5 ist die Kolbenfläche des Bremsunterstützungskolbens kleiner als die Kolbenfläche des Reibbremsbelagkolbens, wodurch sich die Bremskraftunterstützung vergrößert.

Die erfindungsgemäße Scheibenbremse ist insbesondere zu einer elektromechanischen Betätigung mittels eines Elektromotors vorgesehen (Anspruch 7).

Auf Grund der Bremskraftunterstützung kann ein klein bauender und leichter Elektromotor mit geringen bewegten Massen gewählt werden. Ebenso kann ein Rotations/Translations-Umsetzungsgetriebe leicht bauend ausgebildet sein. Die Bremskraftunterstützung der erfindungsgemäßen Scheibenbremse ermöglicht eine Verringerung der zu ihrer Betätigung vorhandenen, beweglichen Massen, die Scheibenbremse weist dadurch eine erhöhte Dynamik auf. Des weiteren genügt ein vergleichsweise leistungsschwacher Elektromotor, der eine verringerte Stromaufnahme aufweist und ein elektrisches Bordnetz eines mit der erfindungsgemäßen Scheibenbremse ausgerüsteten Fahrzeugs verringert.

Anstelle einer Hydraulikflüssigkeit sieht Anspruch 8 eine elastische Masse vor, die die Bewegung des Bremsunterstützungskolbens auf den Reibbremsbelagkolben überträgt. Eine elastische Masse hat den Vorteil, dass eine Abdichtung der Kolben entbehrlich und dass ein Verlust von Hydraulikflüssigkeit nicht zu befürchten ist.

### Zeichnung

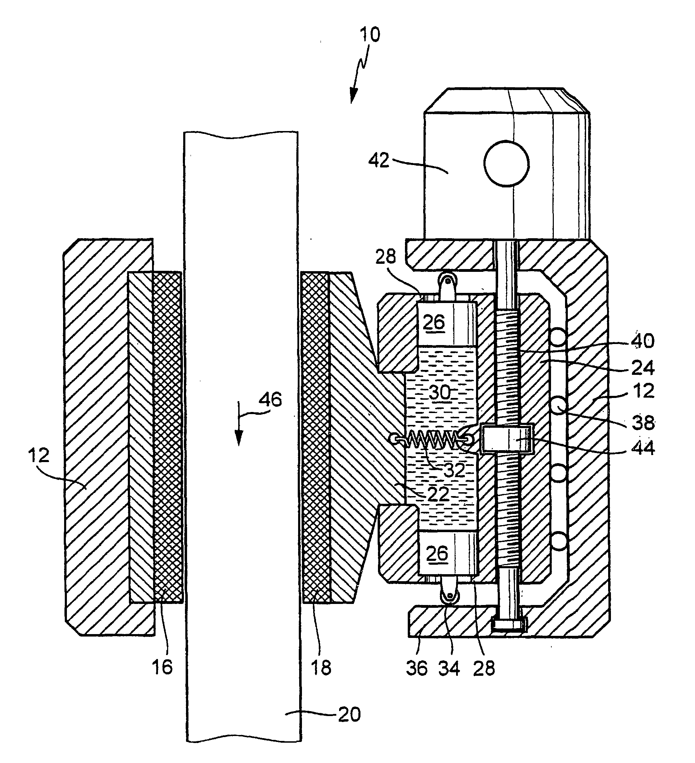

Die Erfindung wird nachfolgend anhand eines in der Zeichnung dargestellten Ausführungsbeispiels näher erläutert. Die einzige Figur zeigt eine erfindungsgemäße Scheibenbremse in Schnittdarstellung mit Blickrichtung radial von außen auf eine Bremsscheibe. Die Zeichnung ist als schematisierte und vereinfachte Darstellung zu verstehen.

### Beschreibung des Ausführungsbeispiels

Die in der Zeichnung dargestellte, erfindungsgemäße Scheibenbremse 10 weist einen Bremssattel 12 auf, in dem zwei Reibbremsbeläge 16, 18 beiderseits einer zwischen ihnen angeordneten Bremsscheibe 20 einliegen. Der Bremssattel 12 ist als sog. Schwimmsattel ausgebildet, er ist quer zur Bremsscheibe 20 verschieblich. Der in der Zeichnung links dargestellte Reibbremsbelag 16 ist fest im Bremssattel 12 aufgenommen, der in der Zeichnung rechts dargestellte Reibbremsbelag 18 ist beweglich. Durch die Schnittdarstellung erscheiht der Bremssattel 12 zweiteilig. Tatsächlich ist der Bremssattel einstückig, er übergreift die Bremsscheibe 20 an deren Umfang.

Der bewegliche Reibbremsbelag 18 weist einen Reibbremsbelagkolben 22 auf, der quer zur Bremsscheibe 20 verschiebbar in einem Mehrfach-Bremszylinder 24 aufgenommen ist. Der Mehrfach-Bremszylinder 24 weist außer dem Reibbremsbelagkolben 22 zwei Bremsunterstützungskolben 26 auf, die gleichachsig einander gegenüberliegend im Bremszylinder 24 angeordnet sind. Die beiden Bremsunterstützungskolben 26 sind quer zum Reibbremsbelagkolben 22 und damit parallel zur Bremsscheibe 20 verschieblich im Bremszylinder 24 aufgenommen. Eine Ausschiebewegbegrenzung 28 in Form eines radial nach innen stehenden Ringbundes des Bremszylinders 24 auf Außenseiten der Bremsunterstützungskolben 26 verhindert, dass sich die Bremsunterstützungskolben 26 über eine Grundstellung hinweg nach außen aus dem Bremszylinder 24 hinaus verschieben. Die Bremsunterstützungskolben 26 sind in der Zeichnung in ihrer Grundstellung bei gelöster Scheibenbremse 10 dargestellt. Die Bremsunterstützungskolben 26 kommunizieren mittels einer Hydraulikflüssigkeit (Bremsflüssigkeit) 30 mit dem Reibbremsbelagkolben 22. Die Hydraulikflüssigkeit 30 ist mit begrenztem und festem Volumen im Mehrfach-Bremszylinder 24 zwischen den Kolben 22, 26 eingeschlossen. Die Bremsunterstützungskolben 26 weisen einen kleineren Durchmesser als der Reibbremsbelagkolben 22 und somit kleinere Kolbenflächen auf. Es findet dadurch eine Kraftübersetzung von den Bremsunterstützungskolben 26 zum Reibbremsbelagkolben 22 statt.

Der Reibbremsbelagkolben 22 weist eine Rückstellfeder 32 auf. Diese ist im dargestellten und beschriebenen Ausführungsbeispiel der Erfindung als Schraubenzugfeder ausgebildet, sie ist im Bremszylinder 24 angeordnet und mit einem Ende in den Reibbremsbelagkolben 22 und mit einem anderen Ende am Bremszylinder 24 eingehängt. Die Rückstellfeder 32 hebt den Reibbremsbelag 18 bei nicht betätigter Scheibenbremse 10 von der Bremsscheibe 20 ab.

An ihren Außenseiten weisen die Bremsunterstützungskolben 26 Rollen 34 auf, mit denen sie sich an einer Innenseite des Bremssattels 12 abstützen. Der Bremssattel 12 bildet ein ortsfestes Widerlager 36 für die Bremsunterstützungskolben 26, wobei die Widerlager 36 der beiden Bremsunterstützungskolben 26 einander zugewandt und damit einander entgegen gerichtet sind. Die beiden Bremsunterstützungskolben 26 sind auf einander zu und damit in entgegengesetzten Richtungen im Bremszylinder 24 verschieblich.

Der Mehrfach-Bremszylinder 24 ist auf einer der Bremsscheibe 20 abgewandten Seite des beweglichen Reibbremsbelags 18 und damit seitlich der Bremsscheibe 20 abgeordnet. Der Bremszylinder 24 ist in der gleichen Richtung wie die Bremsunterstützungskolben 26 und damit parallel zur Bremsscheibe 20 und in einer Sekantenrichtung zur Bremsscheibe 20 im Bremssattel 12 verschieblich. Auf einer der Bremsscheibe 20 abgewandten Rückseite stützt sich der Bremszylinder 24 über Rollen 38 gegen eine Innenseite des Bremssattels 12 ab.

Der Bremszylinder 24 wird von einer Spindel 40 durchsetzt, die mit einem außen am Bremssattel 12 angeflanschten Elektromotor 42 rotierend antreibbar ist. Die Spindel 40 ist parallel zur Bremsscheibe 20 und in Verschieberichtung des Bremszylinders 24 angeordnet. Auf die Spindel 40 ist eine Mutter 44 aufgesetzt über die die Betätigungskraft axial auf den Bremszylinder 24 übertragen werden kann. Die Mutter 44 liegt verdrehgesichert in einer Aussparung des Bremszylinders 24 ein. Die Spindel 40 und die Mutter 44 bilden einen Spindeltrieb 40,44, über den mittels des Elektromotors 42 der Bremszylinder 24 parallel und in einer Sekantenrichtung zur Bremsscheibe 20 verschiebbar ist.

Zur Erläuterung der Funktion der erfindungsgemäßen Scheibenbremse 10 wird nachfolgend angenommen, dass sich die Bremsscheibe 20 in Richtung des Pfeils 46, d. h. in der Zeichnung nach unten, dreht. Zum Betätigen der Scheibenbremse 10 wird durch Bestromen ihres Elektromotors 42 über den Spindeltrieb 40, 44 der Mehrfach-Bremszylinder 24 in Drehrichtung der Bremsscheibe 20 verschoben. Bei der angenommenen Drehrichtung der Bremsscheibe 20 in Richtung des Pfeils 46 wird der Bremszylinder 24 in der Zeichnung also nach unten verschoben. Der in Verschieberichtung des Bremszylinders 24 vordere Bremsunterstützungskolben 26, der sich an seinem Widerlager 36 abstützt, wird durch die Verschiebung des Bremszylinders 24 in diesen hinein verschoben und verdrängt Hydraulikflüssigkeit. Der andere Bremsunterstützungskolben 26 wird von seiner Ausschiebewegbegrenzung 28 an einer Verschiebung aus dem Bremszylinder 24 heraus gehindert und bewegt sich infolge dessen nicht im Bremszylinder 24. Durch seine Verschiebung verdrängt der in Verschieberichtung des Bremszylinders 24 vordere Bremsunterstützungskolben 26 Hydraulikflüssigkeit in Richtung des Reibbremsbelagkolbens 22, der dadurch in Richtung der Bremsscheibe 20 aus dem Bremszylinder 24 heraus verschoben wird. Dabei drückt der Reibbremsbelagkolben 22 den beweglichen Reibbremsbelag 18 gegen die ihm zugewandte Seite der Bremsscheibe 20. In an sich bekannter Weise verschiebt der an der Bremsscheibe 20 anliegende bewegliche Reibbremsbelag 18 den als Schwimmsattel ausgebildeten Bremssattel 12 quer zur Bremsscheibe 20 und der Bremssattel 12 drückt den festen Reibbremsbelag 16 gegen die andere Seite der Bremsscheibe 20. Die Bremsscheibe 20 wird gebremst.

Die drehende Bremsscheibe 20 übt eine Reibungskraft auf den gegen sie gedrückten beweglichen Reibbremsbelag 18 aus, die in Dreh- oder Sekantenrichtung der Bremsscheibe 20 gerichtet ist. Die von der drehenden Bremsscheibe 20 auf den beweglichen Reibbremsbelag 18 ausgeübte Reibungskraft ist parallel zur Verschieberichtung des Bremszylinders 24 gerichtet. Die Reibungskraft wird vom beweglichen Reibbremsbelag 18 über den Reibbremsbelagkolben 22 auf den Bremszylinder 24 übertragen und drückt den Bremszylinder 24 zusätzlich zu der vom Spindeltrieb 40, 44 auf ihn ausgeübten Kraft in Richtung des Widerlagers 36, das sich in Drehrichtung der Bremsscheibe 20 und Verschieberichtung des Bremszylinders 24 vor dem Bremszylinder 24 befindet. Das Widerlager 36 drückt dadurch den in Verschieberichtung des Bremszylinder 24 vorderen Bremsunterstützungskolben 26 stärker in den Bremszylinder 24 hinein, wodurch sich ein Druck der Hydraulikflüssigkeit 30 erhöht, der über den Reibbremsbelagkolben 22 die Andruckkraft des Reibbremsbelags 18 gegen die Bremsscheibe 20 vergrößert. Die Andruckkraft des Reibbremsbelags 18 gegen die Bremsscheibe 20 und damit eine Bremskraft der erfindungsgemäßen Scheibenbremse 10 wird also durch die von der drehenden Bremsscheibe 20 auf den gegen sie gedrückten beweglichen Reibbremsbelag 18 ausgeübte Reibungskraft vergrößert. Die Andruckkraft des Reibbremsbelags 18 gegen die Bremsscheibe 20 wird infolgedessen nur teilweise vom Elektromotor 42 über den Spindeltrieb 40, 44 und zum übrigen Teil durch die von der drehenden Bremsscheibe 20 auf den gegen sie gedrückten beweglichen Reibbremsbelag 18 ausgeübten Reibungskraft aufgebracht, die erfindungsgemäße Scheibenbremse 10 weist folglich eine Bremskraftunterstützung auf. Eine Höhe der Bremskraftunterstützung ist abhängig unter anderem von einem Reibfaktor zwischen der Bremsscheibe 20 und dem Reibbremsbelag 18 und von einem Verhältnis der Kolbenflächen der Bremsunterstützungskolben 26 und des Reibbremsbelagkolbens 22. Durch Wahl der Kolbendurchmesser lässt sich die Höhe der Bremsunterstützung wählen.

Dreht die Bremsscheibe 20 in entgegengesetzter Richtung (Rückwärtsfahrt), wird zur Betätigung der Scheibenbremse 10 der Mehrfach-Bremszylinder 24 durch Bestromen des Elektromotors 42 über den Spindeltrieb 40, 44 in entgegengesetzter Richtung wie vorstehend beschrieben, also wieder in Drehrichtung der Bremsscheibe 20 verschoben. Das Andrücken des Reibbremsbelags 18 und die Bremsunterstützung erfolgen in gleicher Weise wie vorstehend beschrieben, wirksam ist allerdings der andere Bremsunterstützungskolben 26, der sich nunmehr in Verschieberichtung des Bremszylinders 24 vorn befindet. Die Bremsunterstützung ist dadurch unabhängig von einer Drehrichtung der Bremsscheibe 20. Durch unterschiedliche Durchmesser der beiden Bremsunterstützungskolben 26 kann eine unterschiedliche hohe Bremsunterstützung für die beiden Drehrichtungen der Bremsscheibe 20, also beispielsweise eine unterschiedlich hohe Bremsunterstützung für Vorwärts- und Rückwärtsfahrt gewählt werden.

Anstatt der Hydraulikflüssigkeit 30 kann der Mehrfach-Bremszylinder 24 der erfindungsgemäßen Scheibenbremse 10 eine elastische Masse enthalten, die einen von einem der beiden Bremsunterstützungskolben 26 beim Verschieben des Bremszylinders 24 ausgeübten Druck auf den Reibbremsbelagkolben 22 überträgt. Beispiele für solche elastische Massen sind Silicon, Elastomer oder EPDM (Ethylen-Propylen-Dien-Elastomer).

## Patentansprüche

1. Scheibenbremse, mit einem Reibbremsbelag (18), der gegen eine Bremsscheibe (20) drückbar ist, wobei die Scheibenbremse (10) einen Mehrfach-Bremszylinder (24) aufweist, der seitlich der Bremsscheibe (20) angeordnet und der in einer Sekantenrichtung der Bremsscheibe (20) beweglich ist, wobei in dem Bremszylinder (24) ein Reibbremsbelagkolben (22) quer zur Bremsscheibe (20) verschieblich aufgenommen ist, mit dem der Reibbremsbelag (18) gegen die Bremsscheibe (20) drückbar ist, wobei in dem Bremszylinder (24) ein Bremsunterstützungskolben (26) in Bewegungsrichtung des Bremszylinders (24) verschieblich aufgenommen ist, der sich an einem ortsfesten Widerlager (36) abstützt und wobei der Reibbremsbelagkolben (22) und der Bremsunterstützungskolben (26) miteinander kommunizieren, **dadurch gekennzeichnet, dass** der Reibbremsbelagkolben (22) und der Bremsunterstützungskolben (26) über ein zwischen diesen Kolben (22, 26) eingeschlossenes, mit einem Druckübertragungsmedium gefüllten Volumen miteinander kommunizieren und dass zum Anlegen des Reibbremsbelags (18) gegen die Bremsscheibe (10) der Mehrfach-Bremszylinder (24) in Drehrichtung der Bremsscheibe (20) und in Richtung des ortsfesten Widerlagers (36) des Bremsunterstützungskolbens (6) verschoben wird.

2. Scheibenbremse nach Anspruch 1, **dadurch gekennzeichnet, dass** der Bremszylinder (24) zwei Bremsunterstützungskolben (26) aufweist, die in entgegengesetzten Richtungen verschieblich im Bremszylinder (24) aufgenommen sind und die sich an einander entgegengerichteten Widerlagern (36) abstützen, und dass die beiden Bremsunterstützungskolben (26) eine Ausschiebewegbegrenzung (28) aufweisen.

3. Scheibenbremse nach Anspruch 2, **dadurch gekennzeichnet, dass** die Bremsunterstützungskolben (26) gleich große Kolbenflächen aufweiseh.

4. Scheibenbremse nach Anspruch 1, **dadurch gekennzeichnet, dass** der Bremsunterstützungskolben (26) eine Kolbenfläche anderer Größe als der Reibbremsbelagkolben (22) aufweist.

5. Scheibenbremse nach Anspruch 4, **dadurch gekennzeichnet, dass** die Kolbenfläche des Bremsunterstützungskolbens (26) kleiner als die Kolbenfläche des Reibbremsbelagkolbens (22) ist.

6. Scheibenbremse nach Anspruch 1, **dadurch gekennzeichnet, dass** die Scheibenbremse (10) eine Rückstellfeder (32) für den Reibbremsbelagkolben (22) aufweist.

7. Scheibenbremse nach Anspruch 1, **dadurch gekennzeichnet, dass** die Scheibenbremse (10) einen Elektromotor (42) zum Bewegen des Bremszylinders (24) in der Sekantenrichtung der Bremsscheibe (20) aufweist.

8. Scheibenbremse nach Anspruch 1, **dadurch gekennzeichnet, dass** der Bremszylinder (24) eine elastische Masse anstelle einer Hydraulikflüssigkeit aufweist.

## Claims

1. Disc brake, having a friction brake pad (18) which can be pressed against a brake disc (20), the disc brake (10) having a multiple brake cylinder (24) which is arranged at the side of the brake disc (20) and which is movable in a secant direction of the brake disc (20), a friction-brake-pad piston (22) being accommodated in the brake cylinder (24) in a manner such that it can be displaced transversely with respect to the brake disc (20) and with which the friction brake pad (18) can be pressed against the brake disc (20), a brake-supporting piston (26) being accommodated in the brake cylinder (24) in a manner such that it can be displaced in the direction of movement of the brake cylinder (24) and being supported on a positionally fixed abutment (36), and the friction-brake-pad piston (22) and the brake-supporting piston (26) communicating with each other, **characterized in that** the friction-brake-pad piston (22) and the brake-supporting piston (26) communicate with each other via a volume which is enclosed between these pistons (22, 26) and is filled with a pressure-transfer medium, and **in that**, in order to place the friction brake pad (18) against the brake disc (10), the multiple brake cylinder (24) is displaced in the direction of rotation of the brake disc (20) and in the direction of the positionally fixed abutment (36) of the brake-supporting piston (6).

2. Disc brake according to Claim 1, **characterized in that** the brake cylinder (24) has two brake-supporting pistons (26) which are accommodated in the brake cylinder (24) in a manner such that they can be displaced in opposed directions and which are supported on abutments (36) acting in opposed directions to each other, and **in that** the two brake-supporting pistons (26) have a push-out travel limitation (28).

3. Disc brake according to Claim 2, **characterized in that** the brake-supporting pistons (26) have piston surfaces of identical size.

4. Disc brake according to Claim 1, **characterized in that** the brake-supporting piston (26) has a piston surface of different size than the friction-brake-pad piston (22).

5. Disc brake according to Claim 4, **characterized in that** the piston surface of the brake-supporting piston (26) is smaller than the piston surface of the friction-brake-pad piston (22).

6. Disc brake according to Claim 1, **characterized in that** the disc brake (10) has a restoring spring (32) for the friction-brake-pad piston (22).

7. Disc brake according to Claim 1, **characterized in that** the disc brake (10) has an electric motor (42) for moving the brake cylinder (24) in the secant direction of the brake disc (20).

8. Disc brake according to Claim 1, **characterized in that** the brake cylinder (24) has an elastic mass instead of a hydraulic fluid.

## Revendications

1. Frein à disque, comportant une plaquette de frein à friction (18) pouvant être pressée contre un disque de frein (20), le frein à disque (10) présentant un cylindre de frein multiple (24) disposé sur le côté du disque de frein (20) et mobile dans une direction sécante du disque de frein (20), dans lequel un piston de plaquette de frein à friction (22) est logé de façon mobile dans le cylindre de frein (24) perpendiculairement au disque de frein (20) et permet de pousser la plaquette de frein à friction (18) contre le disque de frein (20), dans lequel un piston d'assistance au freinage (26) est logé de façon mobile dans le cylindre de frein (24) dans la direction de mouvement du cylindre de frein (24) et s'appuie sur une butée (36) fixe, et dans lequel le piston de plaquette de frein à friction (22) et le piston d'assistance au freinage (26) communique l'un avec l'autre,
**caractérisé en ce que**
le piston de plaquette de frein à friction (22) et le piston d'assistance au freinage (26) communiquent l'un avec l'autre par le biais d'un volume rempli d'un moyen de transmission de pression disposé entre ces deux pistons (22, 26), et pour l'application de la plaquette de frein à friction (18) contre le disque de frein (10), le cylindre de frein multiple (24) est déplacé dans la direction de rotation du disque de frein (20) et en direction de la butée fixe (36) du piston d'assistance au freinage (6).

2. Frein à disque selon la revendication 1,
**caractérisé en ce que**
le cylindre de frein (24) présente deux pistons d'assistance au freinage (26), logés de façon mobile dans des directions opposées dans le cylindre de freinage (24) et qui s'appuient sur des butées (36) orientées dans une direction contraire l'une par rapport à l'autre, et les deux pistons d'assistance au freinage (26) présentent une limitation de la course de sortie (28).

3. Frein à disque selon la revendication 2,
**caractérisé en ce que**
les pistons d'assistance au freinage (26) présentent des surfaces de piston de même dimension.

4. Frein à disque selon la revendication 1,
**caractérisé en ce que**
le piston d'assistance au freinage (26) présente une surface de piston de dimension différente de celle du piston de plaquette de frein à friction (22).

5. Frein à disque selon la revendication 4,
**caractérisé en ce que**
la surface de piston du piston d'assistance au freinage (26) est inférieure à la surface de piston du piston de plaquette de frein à friction (22).

6. Frein à disque selon la revendication 1,
**caractérisé en ce que**
le frein à disque (10) présente un ressort de rappel (32) pour le piston de plaquette de frein à friction (22).

7. Frein à disque selon la revendication 1,
**caractérisé en ce que**
le frein à disque (10) présente un moteur électrique (42) permettant le déplacement du cylindre de frein (24) dans la direction sécante du disque de frein (20).

8. Frein à disque selon la revendication 1,
**caractérisé en ce que**
le cylindre de frein (24) présente une masse élastique à la place d'un liquide hydraulique.
